# EUROPÄISCHE PATENTSCHRIFT

(11) **EP 1 647 184 B1**
(45) Veröffentlichungstag und Bekanntmachung des Hinweises auf die Patenterteilung: **10.01.2007**
(21) Anmeldenummer: 04023840.4
(22) Anmeldetag: 06.10.2004
(51) Int. Cl.: A01K 63/06

(54) **Rahmenelement zum Aufsetzen auf die Öffnung eines Aquariumgefässes**
Frame for mounting on top of an aquarium
Support positionne en partie supérieure d'un aquarium

(43) Veröffentlichungstag der Anmeldung: 19.04.2006
(73) Patentinhaber: Juwel Aquarium GmbH & Co. KG, 27356 Rotenburg/Wümme (DE)
(72) Erfinder: Köhlmoos, Gerd, 21224 Rosengarten (DE)
(74) Vertreter: Niedmers, Ole

(56) Entgegenhaltungen:
- DE-A1- 3 409 336
- DE-A1- 19 813 080
- DE-U1- 29 907 714
- FR-A- 2 792 059

## Beschreibung

Die Erfindung betrifft ein Rahmenelement zum Aufsetzen auf die Öffnung eines Aquariumgefäßes, wobei das Rahmenelement ein um die Öffnung im wesentlichen umlaufendes, im Querschnitt winkelförmiges Halteelement auf-weist, und wobei ein Steg des winkelförmigen Halteelementes im wesentlichen auf der Außenoberfläche des Aquariumgefäßes aufliegt.

Ein Rahmenelement dieser Art ist bekannt (DE-C-34 09 336). Das bekannte Rahmenelement dient zur Aufnahme einer ein- oder mehrteiligen Aquariumabdeckung, mit der die Öffnung des Aquariumgefäßes abgedeckt werden kann. Das Rahmenelement dient auch zur Aufnahme und Befestigung von Leuchtmitteln, mit denen das Aquariumgefäß von oben, d.h. in das Aquariumwasser hinein, beleuchtbar ist. Des weiteren kann das Rahmenelement auch zur Aufnahme bzw. Befestigung von Filter-, Pumpen- und Zubehöreinrichtungen verwendet werden, die als Zubehörteile die Funktionsfähigkeit und die Einsatzbreite des Aquariums verbessern und ergänzen.

Das bekannte Rahmenelement aber auch ähnliche andere bekannte Rahmenelemente dienen somit vornehmlich lediglich der Aufnahme der Abdeckungen, Beleuchtungsmitteln, Zubehör und dergleichen und haben keinerlei weitere Funktion im Hinblick auf das Aquariumgefäß und bilden darüber hinaus einen oberen, ggf. auch optisch ansprechenden Abschluß des Aquariumgefäßes. Der Trend in der Aquaristik schlechthin ist die Hinwendung zu immer großvolumigeren Aquariumgefäßen, wobei herstellerseitig angestrebt wird, daß das konstruktive Grundprinzip der Aquariumgefäße auch bei den im Trend liegenden großvolumigen Aquariumgefäßen gegenüber den bisherigen Standardgrößen nicht verlassen wird, da die Aquariumgefäße seit einigen Jahren mittels Fertigungsrobotern hergestellt werden und die Fertigungstakte mittels der Roboter möglichst bei allen Aquariumgefäßen auch unterschiedlich großer Aquariumvolumina aus Zeit-, fertigungstechnischen und Kostengründen gleich gehalten werden müssen.

Norm- bzw. gesetzliche Grundlage bestimmen zudem, daß ein mit Wasser gefülltes Aquariumgefäß auch in Abhängigkeit seiner Größe bzw. seines Volumens bestimmten Festigkeitskriterien genügen muß, wobei ein wesentliches Kriterium die Wöl- bungselastizität der beispielsweise ein quaderförmiges Aquariumgefäß begrenzenden vorderen und hinteren Seitenwände ist.

Aufgrund der durch das Wasser auf die vorderen und hinteren Seitenwände aber auch auf die seitlich begrenzenden Seitenwände ausgeübten beträchtlichen Kräfte wird bei großen Aquariumgefäßen die maximal zulässige Wölbungsgrenze der Begrenzungsflächen, bei einem Aquariumgefäß bestehen regelmäßig alle seitlichen und sogar die untere Begrenzungsfläche aus Glaswerkstoff, erreicht und bei sehr großvolumigen Aquariumgefäßen sogar überschritten. Eine Stabilitätserhöhung durch das Vorsehen dickeren Glaswerkstoffs ist nur in engen Grenzen möglich, da dadurch einerseits das Aquariumgefäß sehr viel schwerer wird, andererseits höhere Werkstoff- und Fertigungskosten nachsichzieht und andererseits Glas als gegenüber Wasser optisch dichteres Medium eine optische Verzerrung für den Betrachter des Inhalts eines Aquariumgefäßes nachsichzieht, so daß es für den Betrachter zu unangenehmen Verzerrungen bei der Betrachtung des Inhalts des Aquariums (Fische und Pflanzenwelt) kommt, wobei die Verzerrung mit der Dicke der Begrenzungswände des Aquariumgefäßes zunimmt.

Es hat Versuche gegeben, die Stabilität auch großvolumiger Aquariumgefäße dadurch zu erhöhen, daß die Öffnung des Aquariumgefäßes verstrebt wurde oder man hat aufwendige Metallrahmen als Rahmenelemente verwendet, die zusätzlich noch in aufwendigen Konstruktionen, die aufwendig fertigungstechnisch herzustellen waren, zu verstreben. Metallkonstruktionen sind aufgrund ihrer Korrosionsanfälligkeit nur dann aufgrund der ständigen Berührung mit Wasser bzw. einem wasserdampfangereicherten Restvolumen des Aquariumgefäßes oberhalb des Aquariumwassers lediglich durch korrosionsbeständige Stahlkonstruktionen (Edelstahl und dgl.) möglich, was die Herstellungskosten derartig aufgerüsteter großvolumiger Aquariumgefäße in die Höhe schnellen läßt und somit für den Verbraucher unattraktiv werden läßt.

Es ist somit Aufgabe der vorliegenden Erfindung, ein Rahmenelement der eingangs genannten Art zu schaffen, mit dem auch großvolumige Rahmenelemente versehen und derart stabilisiert werden können, daß sie im Hinblick auf die Norm- bzw. gesetzlichen Vorschriften innerhalb der zulässigen Wölbungscharakteristik der Begrenzungsflächen bleiben, wobei das Rahmenelement weitestgehend seine bisherige Form behält, so daß es auch im Rahmen einer robotergestützten Fertigung des Aquariumgefäßes gleichartig und gleichwertig wie bisher eingesetzt werden kann, das einfach und kostengünstig herstellbar ist und zudem auch in der Lage ist, zusätzlich Aquariumabdeckungselemente, Leuchtmittel und sonstiges Zubehör als Befestigungs- bzw. Anordnungsbasis aufzunehmen, wobei das Halteelement aber prinzipiell unabhängig von der gewählten Größe des Aquariumgefäßes einsetzbar sein soll.

Gelöst wird die Aufgabe gemäß der Erfindung dadurch, daß ein Querelement vorgesehen ist, das das Halteelement im wesentlichen an dessen einander gegenüberliegenden Seiten haltend ergreift.

Das Vorsehen dieses Querelementes im Zusammenwirken mit dem Halteelement hat bei vermeintlich einfacher Konstruktion den sehr wesentlichen Vorteil, daß dadurch gezielt im Bereich der größten Wölbung der Begrenzungsflächen eines Aquariumgefäßes eine Aufnahme der am größten wirksamen Kräfte möglich ist, wobei vorteilhafterweise das Grundprinzip des Rahmenelementes gegenüber dem gattungsbildenden Rahmenelements nicht verlassen würde, so daß dieses, wie angestrebt, wie bisher auch im Rahmen eines robotergestützten Fertigungszyklus von Aquariumgefäßen eingesetzt werden kann. Auch fertigungstechnisch wird durch die vorgeschlagene erfindungsgemäße Lösung der bisher vorgegebene Weg zur Herstellung eines derartigen Rahmenelementes im Prinzip beibehalten, so daß auch werkstofftechnisch und somit kostenmäßig der bisher vorgegebene Fertigungs- und Kostenrahmen gegenüber den gattungsgemäßen Rahmenelementen nicht verlassen wird.

Gemäß einer vorteilhaften Ausgestaltung des Rahmenelementes ist das Querelement derart gestellt, daß es eine gezielte Längenänderung ausführen kann. Das bedeutet, daß in Abhängigkeit der Norm- und gesetzlich vorgegebenen Maßgaben im Hinblick auf die maximal zulässige Wölbung der Seitenflächen bzw. Seitenelemente des Aquariumgefäßes eine sehr genaue Abstimmung in Abhängigkeit des Volumens des Aquariumgefäßes, mit dem das Rahmenelement ausgerüstet werden soll, möglich ist. Das Querelement bildet faktisch ein längenbegrenztes bzw. längenbegrenzendes Federelement.

Gemäß einer weiteren vorteilhaften Ausgestaltung des Rahmenelementes ist dieses derart ausgestaltet, daß die gezielte Längenveränderung durch elastische Verformung des Querelementes erfolgt. Die elastische Verformbarkeit ist dabei derart bemessen bzw. eingestellt, daß ein bestimmter Grad der Verformung der Begrenzungsflächen des Aquariumgefäßes bei einem mit Wasser bzw. Flüssigkeit schlechthin gefüllten Aquariumgefäß konstruktiv entsprechend der konstruktiven Ausbildung des Querelementes möglich ist, so daß die Norm- bzw. gesetzlichen Vorschriften bei Aquariumgefäßen unterschiedlichen Volumens bis hin zu dem größtmöglich denkbaren Aquariumvolumen eingehalten werden können.

Die Ausgestaltung des Rahmenelementes ist, um die vorangehend aufgeführten Kriterien erfüllen zu können, vorteilhafterweise derart gewählt, daß das Querelement im Längsquerschnitt, bezogen auf die Positionierung des Querelementes zwischen den im wesentlichen gegenüberliegenden Seiten des Halteelementes, bogenförmig ausgebildet ist. Dadurch wird auf einfache aber effektive und konstruktiv geniale Weise ein Querelement geschaffen, das einerseits seine feste Ausdehnungsbegrenzung selbst definiert und andererseits hinreichend elastisch ist, um die natürliche und auch statisch gewollte Wölbung bzw. Wölbbarkeit der Begrenzungsflächen des Aquariumgefäßes zu gewährleisten.

Vorteilhafterweise ist die durch den Bogen gebildete Strecke derart gewählt, d.h. der Bogen entsprechend ausgebildet, daß eine maximal mögliche Längenveränderung des Querelementes dann begrenzt bzw. abgeschlossen ist, wenn der Bogen sich bei entsprechender Belastung im wesentlichen annähernd zu einer Geraden gestreckt hat.

Prinzipiell sind die Formen des Querelements im Querquerschnitt beliebig geeignet wählbar unter der Maßgabe, daß die vorangehend aufgeführten vorteilhaften Eigenschaften damit realisiert werden können. Um aber die Stabilität bei möglichst geringem Gewicht, d.h. möglichst geringem Werkstoffaufwand so hoch wie möglich auszubilden bzw. zu gestalten, ist es vorteilhaft, das Querelement im Querquerschnitt im wesentlichen rohrförmig auszubilden, wobei vorzugsweise das Rohr einen im wesentlichen rechteckigen Querschnitt aufweist. Es sind aber auch andere geeignete rohrförmige Querquerschnittsformen möglich, beispielsweise dreieckig, trapezförmig, sogar n-eckig und kreisförmig.

Grundsätzlich können das Halteelement und das Querelement, jeweils gesondert hergestellt und im Zuge der Montage, d.h. des Aufsetzens des Rahmenelementes auf die Öffnung des Aquariumgefäßes, miteinander geeignet verbunden werden, d.h. beispielsweise mittels Klebung oder mittels zwischen dem Halteelement und dem Querelement ausgebildeten Rast- bzw. Clipverbindungen. Es ist auch möglich, vor dem Aufsetzen des Rahmenelementes auf die Öffnung des Aquariumgefäßes das Querelement mit dem Halteelement beispielsweise mittels Schweißung zu verbinden, soweit die jeweiligen, das Halteelement und das Querelement bildenden Werkstoffe dieses werkstofftechnisch zulassen.

Besonders vorteilhaft ist es aber, da dadurch Werkstoff, Zeit und somit Kosten im Zusammenhang mit der Verbindung beider Elemente entfallen, das Halteelement und das Querelement einstückig miteinander auszubilden, wobei dieses im wesentlichen gleiche Werkstoffe für Halteelement und Querelement erfordert.

Zum Zwecke der einfachen Montage bzw. Befestigung des Rahmenelementes am Aquariumgefäß ist es zudem gemäß einer weiteren anderen Ausführungsform vorteilhaft, daß das im Querschnitt winkelförmige Halteelement einen im wesentlichen zum ersten Steg parallelen zweiten Steg aufweist, wobei erster und zweiter Steg zusammen mit dem dazwischen liegenden Schenkel des Halteelementes ein im Querschnitt U-profilförmiges Halteelement bilden. Mit diesem U-Profil kann dann das Rahmenelement, sich selbst stabilisierend, auf die Öffnung des Aquariumgefäßes gesetzt werden, wobei die Seitenflächen des Aquariumgefäßes in das U-Profil eingreifen und mit ihren oberen Kanten innen auf dem Schenkel zum liegen kommen. Dadurch wird auch ein sowohl technisch als auch optisch angemessener oberer Abschluß des Aquariumgefäßes geschaffen.

Auch wenn im Zusammenhang mit der vorangehend aufgeführten Beschreibung der konstruktiven Ausgestaltung des Rahmenelementes im Zusammenwirken mit Aquariumgefäßen und der Darstellung seiner vorteilhaften Weiterbildungen aus Einfachheitsgründen von einem quaderförmigen Aquariumgefäß ausgegangen war, das jeweils im wesentlichen plane Begrenzungsflächen (Querseitenflächen, Längsseitenflächen, Boden) aufweist, ist das erfindungsgemäße Rahmenelement prinzipiell von der Form des Aquariumgefäßes unabhängig. So ist es beispielsweise ebenfalls vorteilhafterweise möglich, das Halteelement nicht nur auf eine im wesentlichen rechteckige Öffnung eines Aquariumgefäßes aufzusetzen, sondern vorteilhafterweise ebenfalls auf eine im wesentlichen wenigstens teilweise gebogen ausgebildete Öffnung eines Aquariumgefäßes, auf eine dreieckförmige Öffnung eines Aquariumgefäßes, bei der die sichtbare Begrenzungsfläche zudem ebenfalls gebogen sein kann, oder auf eine im wesentlichen kreisförmig oder elliptisch ausgebildete Öffnung eines Aquariumgefäßes aufzusetzen. Zusammenfassend kann gesagt werden, daß der erfindungsgemäße Aufbau des Rahmenelementes prinzipiell unabhängig von der Form des Aquariumgefäßes ist.

Darüber hinaus ist es auch möglich, wenn ganz besonders große Kräfte bei sehr großvolumigen Aquariumgefäßen aufgenommen werden müssen, nicht nur ein Querelement auf vorgeschriebene Weise mit dem Halteelement auszubilden, sondern eine geeignete Mehrzahl und diese insbesondere an den Stellen des Halteelementes zu positionieren, bei denen die größten zu erwartenden Kräfte auftreten bzw. in die jeweiligen Querelemente eingeleitet werden müssen.

Wie oben schon angedeutet, kann der das Rahmenelement bildende Werkstoff, d.h. für das Halteelement und das Querelement, im Prinzip beliebig geeignet ausgewählt werden. So sind metallische Werkstoffe, aber auch Kombinationen aus Metall und Kunststoff, ggf. auch Verbundwerkstoffe, beispielsweise aus glasfaserverstärktem Kunststoff usw., möglich. Vorteilhaft, weil preisgünstig bereitstellbar und auch preisgünstig herstellbar, ist es aber, das gesamte Rahmenelement aus Kunststoff, vorteilhafterweise aus spritzfähigem Kunststoff, auszubilden, so daß dann in einem Arbeitsgang das gesamte aus Halteelement und Querelement bzw. Querelementen bestehende Rahmenelement hergestellt werden kann.

Um insbesondere bei aus Kunststoffwerkstoff hergestellten Rahmenelementen sicherzustellen, daß die durch das Wasservolumen über die Begrenzungsflächen des Aquariumgefäßes auf das Rahmenelement bzw. Halteelement wirkenden Kräfte und die durch das Querelement aufgebracht Gegenkraft möglichst gleichmäßig auf das Halteelement bzw. über das Halteelement auf die Begrenzungsflächen des Aquariumgefäßes verteilt werden, ist es vorteilhaft, das Rahmenelement mit dem Aquariumgefäß kraftschlüssig zu verbinden, wobei diese kraftschlüssige Verbindung vorteilhafterweise mittels Klebung zwischen dem Rahmenelement und dem die Seiten- bzw. Begrenzungsflächen des Aquariumgefäßes bildenden Glas auszubilden ist. Durch die Klebung ist zudem eine zusätzliche Abdichtung gegenüber dem Wasser- bzw. Flüssigkeitsinhalt des Aquariumgefäßes möglich, da dadurch verbindert wird, daß die Behälterflüssigkeit durch Kapillarwirkung zwischen Aquariumgefäß und Rahmenelement eindringen und nach außen austreten kann.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein quaderförmiges Aquariumgefäß, auf das das Rahmenelement gemäß der Erfindung aufgesetzt ist,
- Fig. 2: in der Draufsicht das Rahmenelement gemäß Fig. 1,
- Fig. 3: in der Seitenansicht einen Schnitt entlang der Linie C-D von Fig. 2 in gegenüber dem Maßstab von Fig. 1 vergrößerter Darstellung,
- Fig. 4: ein Detail des Verbindungsbereiches des Halteelementes mit dem Querelement aus Fig. 3 in nochmals gegenüber der Darstellung von Fig. 3 vergrößertem Maßstab und
- Fig. 5: einen Schnitt entlang der Linie A-B von Fig. 2 durch das Halteelement sowie das Querelement, das im Querschnitt bogenförmig ausgebildete Querelement hervorhebend.

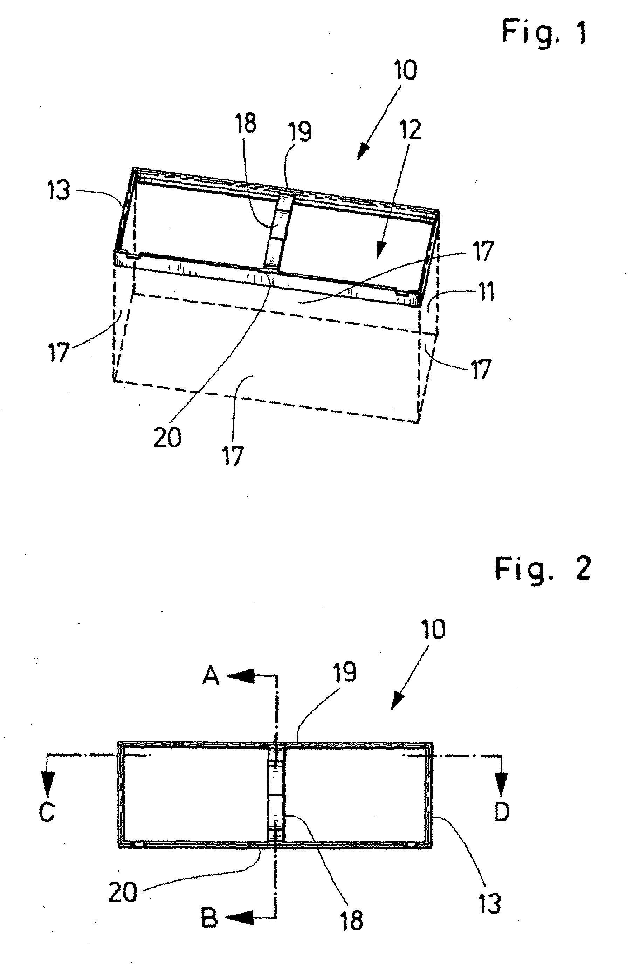

Es wird zunächst auf die Darstellung von Fig. 1 Bezug genommen. Ein aus dem Werkstoff Glas bestehendes Aquariumgefäß 11 ist hier als quaderförmiges Aquariumgefäß 11 gestrichelt dargestellt. Das Aquariumgefäß 11 weist bei der hier beschriebenen Ausgestaltung und bei der Darstellung gemäß Fig. 1 eine hintere und vordere Außenfläche 17 sowie zwei seitlich begrenzende Außenflächen 17 und eine Bodenfläche auf. Da derartige Aquariumgefäße 11 an sich allgemein bekannt sind, wird auf eine weitere Schilderung des Aufbaus des Aquariumgefäßes 11 hier verzichtet.

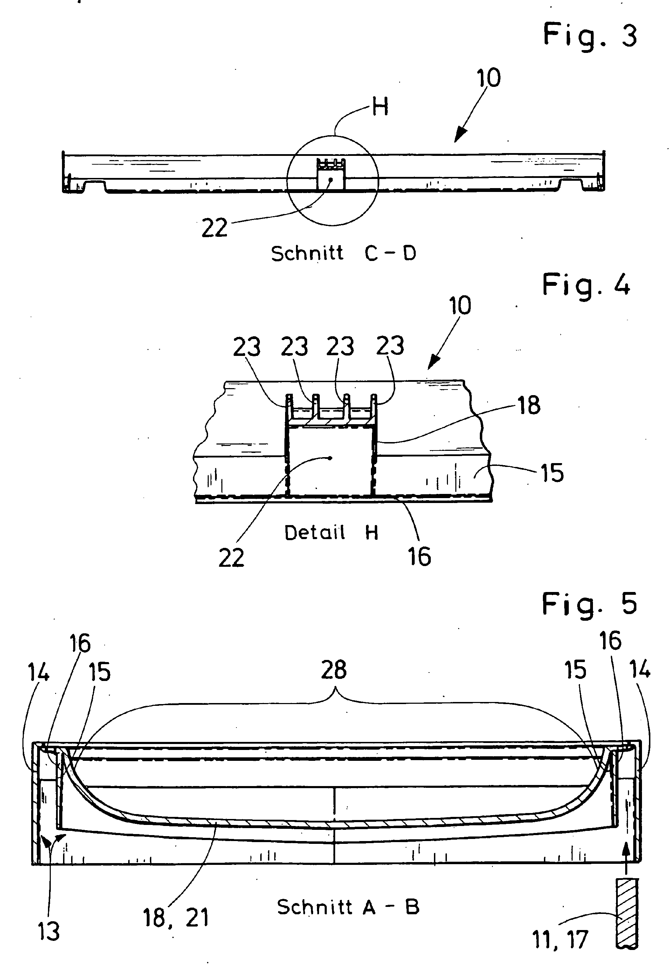

Auf die Öffnung 12 des Aquariumgefäßes 11 ist ein Rahmenelement 10 aufgesetzt. Das Rahmenelement 10, vgl. auch insbesondere die Darstellung von Fig. 5, weist als zentrales Teil ein um die Öffnung 12 herumlaufendes Halte-element 13 auf, das im wesentlichen im Querschnitt U-profilförmig ausgebildet ist. Einem äußeren ersten Steg 14 des Halteelements liegt ein im wesentlichen dazu parallel angeordneter zweiter Steg 15 gegenüber. Der erste und der zweite Steg 14, 15 sind über einen dazwischenliegenden Schenkel 16 verbunden. Das im Querschnitt bei der hier beschriebenen Ausführungsform des Halteelements 13 gebildete U-profilförmige Element nimmt zwischen den beiden Stegen 14, 15 die scheibenförmigen Außenflächenelemente 17 des Aquariumgefäßes 11 im Bereich der Öffnung 12 des Aquariumgefäßes 11 auf, was in Fig. 5 noch in auseinandergezogener Darstellung schematisch rechts in Fig. 5 beispielhaft dargestellt ist, wobei der Pfeil die Richtung des Einschiebens in das U-Profil des Halteelements 13 andeutet.

Das vorbeschriebene Halteelement 13 weist in bezug auf die vorangehend beschriebene Struktur einen an sich auch bei im Stand der Technik bekannten Halteelementen 13 bekannten Aufbau auf, so daß darauf hier nicht weiter eingegangen zu werden braucht.

Das Halteelement 13 weist wenigstens ein Querelement 18 auf, das das Halteelement 13 im wesentlichen an dessen einander gegenüberliegenden Seiten 19, 20 haltend ergreift. Das Querelement 18 ist bei der in größerer Einzelheit in der in Fig. 5 dargestellten Ausgestaltung im Längsquerschnitt bogenförmig 21 ausgebildet. Die Angabe Längsquerschnitt bezieht sich auf die Positionierung des Querelementes 18 zwischen den im wesentlichen gegenüberliegenden Seiten 19, 20 des Halteelements 13. Das Querelement 18 ist hier als, bezogen auf die Darstellung gem. den Fig., nach unten offener Kasten, d.h. mit einem U-profilförmigen Querquerschnitt versehen, ausgebildet. Der Querquerschnitt ist hier im wesentlichen rechteckig gewählt. Das bogenförmige Querelement 18 kann noch eine Mehrzahl von rippenartig ausgebildeten Verstärkungselementen 23, vgl. Fig. 4, aufweisen, um die Längsstabilität des Querelementes 18 zu erhöhen. Die Verstärkungselemente können auch nach Art von Waben ausgebildet sein. Die laterale Breite des Querelementes 18 wird in Abhängigkeit seiner dennoch zu erreichenden Stabilität so gering wie möglich gewählt, um optisch so wenig wie möglich in Erscheinung zu treten und einen Schattenwurf im Aquariumgefäß so weit wie möglich zu vermeiden.

Die durch den Bogen 21 gebildete Ausdehnungsstrecke des Querelementes 18 begrenzt im gestreckten Zustand, d.h. dann, wenn das Aquariumgefäß mit Wasser maximal gefüllt ist und der größte Druck auf die Begrenzungsflächen des Aquariumgefäßes 11 wirken, die maximal mögliche Längenausdehnung des Querelementes 18. Das Querelement 18 bzw. der Bogen 21 des Querelements 18 sind konstruktiv derart ausgebildet gewählt, daß das Querelement 18 bei größtmöglicher Belastung der jeweils gegenüberliegenden Seitenflächen des Aquariumgefäßes 11 deren Beugung durch Ausbuchtung begrenzt, und zwar in Übereinstimmung mit den Norm- und gesetzlichen Vorgaben für die zulässige Ausbuchtungstoleranz. Das Halteelement 13 und das Querelement 10 bzw. dann, wenn bei einer besonderen Ausführungsform des Rahmenelementes 10 mehrere Querelemente 18 vorgesehen sind, sind im wesentlichen einstückig ausgebildet, d.h. sie bilden ein einheitliches Formteil. Ein derart ausgebildetes Rahmenelement 10 ist vorzugsweise aus spritzgußfähigem Kunststoff hergestellt, so daß das Rahmenelement 10 mit den Bestandteilen Halteelement 13 und Querelement 18 bzw. Querelementen 18 als integriertes, einstückiges Element herstellbar und handhabbar ist.

Nachdem das Rahmenelement 10 auf vorbeschriebene Weise hergestellt worden ist, kann es auf den oberen Rand des Aquariumgefäßes aufgesetzt werden, wobei nachfolgend zur Ausbildung einer kraftschlüssigen Verbindung die Seitenflächen des Aquariumgefäßes 11, die in dem im Querschnitt U-profilförmigen Halteelement 13 aufgenommen werden, dort mit dem Halteelement 13 verklebt werden.

### Bezugszeichenliste

- 10: Rahmenelement
- 11: Aquariumgefäß
- 12: Öffnung (des Aquariumgefäßes)
- 13: Halteelement
- 14: erster Steg (Halteelement)
- 15: zweiter Steg (Halteelement)
- 16: Basis/Schenkel (Halteelement)
- 17: Außenfläche (Aquariumgefäß)
- 18: Querelement
- 19: Seite (Halteelement)
- 20: Seite (Halteelement)
- 21: Bogen (Querelement)
- 22: Rohr/rohrförmig (Halteelement)
- 23: Verstärkungselement

## Patentansprüche

1. Rahmenelement zum Aufsetzen auf die Öffnung eines Aquariumgefäßes, wobei der Rahmen ein um eine Öffnung im wesentlichen umschließendes, im Querschnitt winkelförmiges Halteelement aufweist, und wobei ein Steg des winkelförmigen Halteelementes im wesentlichen an der Außenoberfläche des Aquariumgefäßes anliegt, **dadurch gekennzeichnet, daß** wenigstens ein Querelement (18) vorgesehen ist, das das Halteelement (13) im wesentlichen an dessen einander gegenüberliegenden Seiten (19, 20) haltend ergreift.

2. Rahmenelement nach Anspruch 1, **dadurch gekennzeichnet, daß** das Querelement (18) derart gestaltet ist, daß es eine gezielte Längenveränderung ausführen kann.

3. Rahmenelement nach Anspruch 2, **dadurch gekennzeichnet, daß** die gezielte Längenveränderung durch elastische Verformung des Querelementes (18) erfolgt.

4. Rahmenelement nach einem oder mehreren der Ansprüche 1 bis 3, **dadurch gekennzeichnet, daß** das Querelement (18) im Längsquerschnitt, bezogen auf die Positionierung des Querelementes (18) zwischen den im wesentlichen gegenüberliegenden Seiten (19, 20) des Halteelementes (13), bogenförmig (21) ausgebildet ist.

5. Rahmenelement nach Anspruch 4, **dadurch gekennzeichnet, daß** die durch den Bogen (21) gebildete Strecke eine maximal mögliche Längenveränderung des Querelementes (18) begrenzt.

6. Rahmenelement einem oder beiden der Ansprüche 4 oder 5, **dadurch gekennzeichnet, daß** das Querelement (18) im Querschnitt im wesentlichen rohrförmig (22) ausgebildet ist.

7. Rahmenelement nach Anspruch 6, **dadurch gekennzeichnet, daß** das Rohr (22) einen im wesentlichen rechteckigen Querschnitt aufweist.

8. Rahmenelement nach einem oder mehreren der Ansprüche 1 bis 7, **dadurch gekennzeichnet, daß** das Halteelement (13) und das Querelement (18) einstückig ausgebildet sind.

9. Rahmenelement nach einem oder mehreren der Ansprüche 1 bis 8, **dadurch gekennzeichnet, daß** das im Querschnitt winkelförmige Halteelement (13) einen im wesentlichen zum ersten Steg (14) parallelen zweiten Steg (15) aufweist, wobei erster und zweiter Steg (14, 15) zusammen mit dem dazwischenliegenden Schenkel (16) des Halteelementes (13) ein im Querschnitt U-profilförmiges Halteelement (13) bilden.

10. Rahmenelement nach einem oder mehreren der Ansprüche 1 bis 9, **dadurch gekennzeichnet, daß** das Halteelement (13) zum Aufsetzen auf eine im wesentlichen rechteckige Öffnung (12) eines Aquariumgefäßes (11) aufsetzbar ist.

11. Rahmenelement nach einem oder mehreren der Ansprüche 1 bis 9, **dadurch gekennzeichnet, daß** das Halteelement (13) zum Aufsetzen auf eine im wesentlichen wenigstens teilweise gebogen ausgebildete Öffnung (12) eines Aquariumgefäßes (11) aufsetzbar ist.

12. Rahmenelement nach einem oder mehreren der Ansprüche 1 bis 9, **dadurch gekennzeichnet, daß** das Halteelement (13) zum Aufsetzen auf eine im wesentlichen kreisförmig oder elliptisch ausgebildete Öffnung (12) eines Aquariumgefäßes (11) aufsetzbar ist.

13. Rahmenelement nach einem oder mehreren der Ansprüche 1 bis 12, **dadurch gekennzeichnet, daß** das Halteelement (13) und/oder das Querelement (18) aus spritzgußfähigem Kunststoffwerkstoff ausgebildet ist bzw. sind.

14. Rahmenelement nach einem oder mehreren der Ansprüche 1 bis 13, **dadurch gekennzeichnet, daß** dieses mit dem Aquariumgefäß (11) kraftschlüssig verbunden ist.

15. Rahmenelement nach einem oder mehreren der Ansprüche 1 bis 14, **dadurch gekennzeichnet, daß** die kraftschlüssige Verbindung mittels Klebung erfolgt.

## Claims

1. Frame element for fitting on the opening of an aquarium tank, which frame has a retaining element with an angled cross-section essentially surrounding an opening, and a web of the angled retaining element essentially lies against the external surface of the aquarium tank, **characterised in that** a cross-member (18) is provided which grips the retaining element (13) essentially holding its oppositely lying sides (19, 20).

2. Frame element as claimed in claim 1, **characterised in that** the cross-member (18) is designed so that it is able to effect a specific change in length.

3. Frame element as claimed in claim 2, **characterised in that** the selective change in length takes place due to elastic deformation of the cross-member (18).

4. Frame element as claimed in one or more of claims 1 to 3, **characterised in that** the cross-member (18) is of an essentially arcuate shape (21) in longitudinal cross-section by reference to the positioning of the cross-member (18) between the essentially oppositely lying sides (19, 20) of the retaining element (13).

5. Frame element as claimed in claim 4, **characterised in that** the distance formed by the arc (21) limits a maximum possible change of length of the cross-member (18).

6. Frame element as claimed in one or both of claims 4 or 5, **characterised in that** the cross-member (18) is of an essentially tubular shape (22) in cross section.

7. Frame element as claimed in claim 6, **characterised in that** the tube (22) has an essentially rectangular cross-section.

8. Frame element as claimed in one or more of claims 1 to 7, **characterised in that** the retaining element (13) and the cross-member (18) are of an integral design.

9. Frame element as claimed in one or more of claims 1 to 8, **characterised in that** the retaining element (13) with an angled cross-section has a second web (15) essentially parallel with the first web (14) and the first and second web (14, 15) in conjunction with the leg (16) of the retaining element (13) lying in between form a retaining element (13) with a U-shaped contour in cross-section.

10. Frame element as claimed in one or more of claims 1 to 9, **characterised in that** the retaining element (13) used for fitting purposes can be fitted on an essentially rectangular opening (12) of an aquarium tank (11).

11. Frame element as claimed in one or more of claims 1 to 9, **characterised in that** the retaining element (13) used for fitting purposes can be fitted on an opening (12) of an aquarium tank (11) that is essentially at least partially arcuate in shape.

12. Frame element as claimed in one or more of claims 1 to 9, **characterised in that** the retaining element (13) used for fitting purposes can be fitted on an opening (12) of an aquarium tank (11) that is essentially at least partially circular or elliptical in shape.

13. Frame element as claimed in one or more of claims 1 to 12, **characterised in that** the retaining element (13) and/or the cross-member (18) is or are made from injection-mouldable plastic material.

14. Frame element as claimed in one or more of claims 1 to 13, **characterised in that** it is positively connected to the aquarium tank (11).

15. Frame element as claimed in one of claims 1 to 14, **characterised in that** the positive connection is obtained by means of adhesion.

## Revendications

1. Elément cadre à appliquer sur l'ouverture d'une cuve d'aquarium, dans lequel le cadre comporte un élément de maintien entourant sensiblement une ouverture, et de section angulaire, et dans lequel une nervure de l'élément de maintien angulaire repose essentiellement sur la surface extérieure de la cuve d'aquarium, **caractérisé en ce qu'**il est prévu au moins un élément transversal (18) qui saisit et maintien l'élément de maintien essentiellement au niveau de ses faces opposées (19, 20).

2. Elément cadre selon la revendication 1, **caractérisé en ce que** l'élément transversal (18) est configuré de telle sorte qu'il peut exécuter une modification ciblée de la longueur.

3. Elément cadre selon la revendication 2, **caractérisé en ce que** la modification ciblée de la longueur s'effectue par déformation élastique de l'élément transversal (18).

4. Elément cadre selon l'une ou plusieurs des revendications 1 à 3, **caractérisé en ce que**, en coupe longitudinale, rapporté au positionnement de l'élément transversal (18) entre les faces (19, 20) essentiellement opposées de l'élément de maintien (13), l'élément transversal (18) est configuré en forme d'arc (21).

5. Elément cadre selon la revendication 4, **caractérisé en ce que** la droite formée par l'arc (21) limite une modification de longueur maximale possible de l'élément transversal (18).

6. Elément cadre selon l'une ou les deux revendications 4 et 5, **caractérisé en ce que**, dans sa section, l'élément transversal (18) est configuré essentiellement en forme de tube (22).

7. Elément cadre selon la revendication 6, **caractérisé en ce que** le tube (22) présente une section essentiellement rectangulaire.

8. Elément cadre selon l'une ou plusieurs des revendications 1 à 7, **caractérisé en ce que** l'élément de maintien (13) et l'élément transversal (18) sont formés en une pièce.

9. Elément cadre selon l'une ou plusieurs des revendications 1 à 8, **caractérisé en ce que** l'élément de maintien (13) de section angulaire comporte une deuxième nervure (15) essentiellement parallèle à la première nervure (14), la première et la deuxième nervure (14, 15) formant ensemble avec la branche (16) de l'élément de maintien (13) un élément de maintien (13) dont la section est en forme d'un profilé en U.

10. Elément cadre selon l'une ou plusieurs des revendications 1 à 9, **caractérisé en ce que** l'élément de maintien (13) est apte à être placé sur une ouverture (12) essentiellement rectangulaire d'une cuve d'aquarium (11).

11. Elément cadre selon l'une ou plusieurs des revendications 1 à 9, **caractérisé en ce que** l'élément de maintien (13) est apte à être placé sur une ouverture (12) configurée essentiellement au moins en partie courbe d'une cuve d'aquarium (11).

12. Elément cadre selon l'une ou plusieurs des revendications 1 à 9, **caractérisé en ce que** l'élément de maintien (13) est apte à être placé sur une ouverture (12) configurée essentiellement circulaire ou elliptique d'une cuve d'aquarium (11).

13. Elément cadre selon l'une ou plusieurs des revendications 1 à 12, **caractérisé en ce que** l'élément de maintien (13) et/ou l'élément transversal (18) est, respectivement sont, formés en un matériau synthétique pouvant être moulé par injection.

14. Elément cadre selon l'une ou plusieurs des revendications 1 à 13, **caractérisé en ce que** celui-ci est relié à la cuve d'aquarium par adhérence.

15. Elément cadre selon l'une ou plusieurs des revendications 1 à 14, **caractérisé en ce que** la liaison par adhérence s'effectue par collage.
